# EUROPÄISCHE PATENTANMELDUNG

(11) **EP 2 944 173 A1**
(43) Veröffentlichungstag der Anmeldung: **18.11.2015**
(21) Anmeldenummer: 15401042.5
(22) Anmeldetag: 05.05.2015
(51) Int. Cl.: A01B 71/08, A01C 17/00

(54) **SCHLEUDERDÜNGERSTREUER UND VERFAHREN FÜR EINEN SCHLEUDERDÜNGERSTREUER**

(30) Priorität: 14.05.2014 DE 102014106777
(71) Anmelder: Amazonen-Werke H. Dreyer GmbH & Co. KG, 49205 Hasbergen (DE)
(72) Erfinder: Rahe, Florian, 49504 Lotte (DE)

(57) **Zusammenfassung**

Schleuderdüngerstreuer (1) mit einem Vorratsbehälter (2) für Dünger, einer Schleuderscheibe (3) zur Verteilung des Düngers auf einem Feld in einem Streufächer und mit wenigstens einem Radarsensor (5) zur Erfassung einer Streucharakteristik des Streufächers, dadurch gekennzeichnet, dass dem Radarsensor (5) eine Reinigungseinheit (6) zugeordnet ist.

## Beschreibung

Die Erfindung betrifft einen Schleuderdüngerstreuer mit den Merkmalen des Oberbegriffs von Anspruch 1 und ein Verfahren für einen Schleuderdüngerstreuer mit den Merkmalen des Obergriffs von Anspruch 12.

Derartige Schleuderdüngerstreuer werden üblicherweise dazu eingesetzt, den Dünger aus einem Vorratsbehälter mittels einer Schleuderscheibe auf dem Feld zu verteilen. Um eine möglichst gleichmäßige Verteilung des Düngers auf dem Feld zu erzielen, wird das Feld in parallelen Fahrgassen abgefahren und die Feldfläche zwischen den Fahrgassen von beiden Seiten her mit Dünger bestreut. Die Streucharakteristik des Streufächers hängt dabei beispielsweise von der Lage und Größe einer Dosieröffnung gegenüber der Schleuderscheibe, von der Rotationsgeschwindigkeit und der Konfiguration der Schleuderscheibe und/oder von Leitflächenelementen nach der Schleuderscheibe ab. Beispielsweise wird mit einer Schleuderscheibe eine ringförmige und mit zwei Schleuderscheiben eine nierenförmige Streucharakteristik erzeugt.

Allerdings hängt die Streucharakteristik maßgeblich von den physikalischen Eigenschaften des jeweiligen Düngertyps ab. Beispielsweise von der Größe und der Oberflächenrauigkeit der Körner. Da sich so bei verschiedenen Düngertypen unterschiedliche Streucharakteristika des Streufächers ausbilden, hängt davon auch die Gleichmäßigkeit der Düngerverteilung auf dem Feld ab.

Deshalb ist es üblich, die Streucharakteristik des Streufächers für den jeweiligen Schleuderdüngerstreuer und den gewünschten Düngertyp in einem Laborversuch zu vermessen und darauf basierend Steuerungsparameter im Schleuderdüngerstreuer einzustellen. Dadurch wird die Konfiguration der Schleuderscheibe bzw. der Dosieröffnung so angepasst, dass die gewünschte Streucharakteristik des Streufächers erzielt wird.

Nachteilig dabei ist, dass derartige Laborversuche für jeden Maschinen- bzw. Düngertyp separat durchgeführt werden müssen und damit entsprechend aufwändig sind.

Um dem Rechnung zu tragen, wurden Radarsensoren am Schleuderdünger vorgeschlagen, um die Streucharakteristik des Streufächers während der Düngung zu erfassen und darauf basierend die Parameter in der Steuerung des Düngerstreuers anzupassen. Die Radarsensoren sind beispielsweise an einem Schwenkarm angeordnet, der um die Drehachse der Schleuderscheibe geschwenkt werden kann. Dadurch wird der Streufächer mit den Radarsensoren abgetastet und aus den so gewonnenen Messdaten die Streucharakteristik abgeleitet. Alternativ dazu können die Radarsensoren auch an einem bogenförmigen Träger an festen Positionen um die Schleuderscheibe angeordnet sein.

Es hat sich jedoch gezeigt, dass die Streucharakteristik in seltenen Fällen fehlerhaft erfasst wird.

Aufgabe der vorliegenden Erfindung ist es daher, einen Schleuderdüngerstreuer bereitzustellen, bei dem während der Düngung die Streucharakteristik des Streufächers zuverlässiger erfasst werden kann.

Diese Aufgabe wird bei einem Schleuderdüngerstreuer mit den Merkmalen des Oberbegriffs von Anspruch 1 mit den Merkmalen des kennzeichnenden Teils gelöst, wonach dem Radarsensor eine Reinigungseinheit zugeordnet ist.

Radarsensoren gelten im Allgemeinen als verschmutzungsunempfindlich. Beim Einsatz der Radarsensoren an Düngerstreuern hat sich jedoch überraschenderweise herausgestellt, dass sich unter bestimmten Witterungsbedingungen, wie beispielsweise bei Nebel oder erhöhter Feuchtigkeit, eine dickere Schmutzschicht an den Radarsensoren anlagern kann. Die elektromagnetischen Wellen des Radarsensors werden beim Durchlaufen der Schmutzschicht so stark beeinflusst, dass es zu einer fehlerbehafteten Erfassung des Streufächers kommen kann. In der Folge wird auch die Streucharakteristik des Streufächers nicht zuverlässig bestimmt.

Dadurch, dass dem Radarsensor eine Reinigungseinheit zugeordnet ist, kann dieser im Falle einer angelagerten Verschmutzung einfach und zuverlässig gereinigt werden.

Ein Schlepper kann dafür vorgesehen sein, den Schleuderdüngerstreuer entlang von Feldgassen zu ziehen oder zu transportieren. Der Schleuderdüngerstreuer kann typischerweise eine oder zwei Schleuderscheiben umfassen. Denkbar ist auch, dass mehr als zwei Schleuderscheiben am Schleuderdüngerstreuer angeordnet sind. Auf der Schleuderscheibe können Wurfarme zur Verteilung des Düngers auf dem Feld angeordnet sein. Die Schleuderscheibe kann mittels eines Antriebs drehbar sein, um den Dünger mittels zentrifugaler Kräfte zu verteilen. Der Vorratsbehälter kann wenigstens teilweise als sich nach unten verjüngender Trichter ausgebildet sein, an dessen unterem Ende eine Dosieröffnung angeordnet ist. Die Dosieröffnung kann in Größe und Position veränderbar ausgebildet sein.

Der Radarsensor kann dazu ausgebildet sein, elektromagnetische Wellen abzustrahlen und zu empfangen. Die elektromagnetischen Wellen können im Radiofrequenzbereich sein. Die Wellenlänge der elektromagnetischen Wellen kann in einem Bereich von 1 mm - 100 mm sein, insbesondere in einem Bereich von 10 mm - 20 mm. Zur Erfassung des Streufächers kann der Radarsensor mit einem laufzeitbasierenden Messverfahren arbeiten. Dabei wird insbesondere die Laufzeit der elektromagnetischen Wellen vom Radarsensor zum Streufächer und zurück erfasst.

Die Reinigungseinheit kann dazu ausgebildet sein, eine Aus- und Eintrittsoberfläche des Radarsensors für die elektromagnetischen Wellen zu reinigen.

Die Reinigungseinheit kann eine Bürste und/oder einen Gummiwischer mit regelmäßigen oder unregelmäßigen Erhebung zur Reinigung des Radarsensors umfassen. Dadurch ist die Reinigungseinheit besonders einfach und wenig kostenaufwändig ausgebildet. "Bürste" kann hier bedeuten, dass hier mehrere draht- oder haarartige Kunststoffborsten an der Reinigungseinheit angeordnet sind. Der Gummiwischer kann eine Gummilippe umfassen.

Die Reinigungseinheit kann wenigstens eine Leitung und/oder eine Düse zur Abgabe eines Reinigungsmittels auf den Radarsensor umfassen. Dadurch kann eine Schmutzschicht und/oder Ablagerungen an dem Radarsensor ohne mechanischen Kontakt entfernt werden. Das Reinigungsmittel kann Druckluft und/oder eine Reinigungsflüssigkeit wie beispielsweise Wasser umfassen. Das Reinigungsmittel kann Zusätze wie Seife oder Lösungsmittel zum Lösen der Verschmutzung umfassen. Die Düse kann eine Druckluftdüse oder eine Spritzdüse sein. Die Leitung kann eine Röhre oder ein Schlauch sein. Die Reinigungseinheit kann ein Gebläse zur Erzeugung von Druckluft umfassen.

Die Reinigungseinheit kann eine Auffangeinrichtung für das Reinigungsmittel aufweisen, die insbesondere als Absaugeinrichtung ausgebildet ist. Dadurch gelangt das Reinigungsmittel nicht auf das Feld und eine Kontamination kann damit vermieden werden.

Die Reinigungseinheit kann als Abdeckung für den Radarsensor in einer Parkposition ausgebildet sein. Dadurch kann der Radarsensor zwischen den einzelnen Erfassungsvorgängen des Streufächers gereinigt werden und ist in der Parkposition besonders gut gegen Verschmutzungen geschützt.

Der Radarsensor kann mit der Reinigungseinheit über einen Verfahrmechanismus verbunden sein, der zum Verfahren des Radarsensors oder der Reinigungseinheit ausgebildet ist. Dadurch können der Radarsensor und die Reinigungseinheit relativ zueinander zur Reinigung und/oder zur Erfassung des Streufächers verfahren werden. Anders ausgedrückt, kann der Verfahrmechanismus dazu ausgebildet sein, den Radarsensor zur Erfassung des Streufächers und zur Reinigung mit der Reinigungseinheit zu verfahren. Ebenso ist denkbar, dass der Verfahrmechanismus die Reinigungseinheit verfährt, um einen oder mehrere gegenüber der Schleuderscheibe feststehende Radarsensoren zu reinigen.

Der Verfahrmechanismus kann einen Schwenkarm oder eine Schiene mit einem Schlitten zum Verfahren des Radarsensors oder der Reinigungseinheit umfassen. Dadurch ist der Verfahrmechanismus besonders einfach ausgebildet. Die Drehachse des Schwenkarms kann mit der Rotationsachse der Schleuderscheibe zusammenfallen. Der Schwenkarm kann an einem Ende mit dem Radarsensor und am anderen Ende mit einem Antrieb verbunden sein, der den Schwenkarm um die Drehachse dreht. Denkbar ist auch, dass mehrere Radarsensoren an dem Schenkarm angeordnet sind. Alternativ dazu kann die Schiene feststehend am Schleuderdüngerstreuer, insbesondere entlang des Umfangs der Schleuderscheibe, angeordnet sein, wobei der Schlitten mittels eines Antriebs gegenüber der Schiene verfahrbar ist. Der Radarsensor und/oder die Reinigungseinheit können mit dem Schlitten fest verbunden sein. Dadurch ist der Radarsensor bzw. die Reinigungseinheit besonders gut geschützt.

Der Radarsensor kann zur Abtastung des Streufächers an dem Schwenkarm angeordnet sein und der Radarsensor kann zwischen zwei Endpositionen mit dem Schwenkarm schwenkbar sein, wobei die Reinigungseinheit an einer der beiden Endpositionen angeordnet ist. Dadurch kann der Radarsensor beim Erreichen der Endposition besonders einfach gereinigt werden. Die Reinigungseinheit kann an der Endposition als Abdeckung ausgebildet sein. Dadurch kann der Radarsensor an der Endposition besonders gut vor mechanischer Beschädigung und Verschmutzung geschützt werden.

Mehrere der Radarsensoren können an einem Träger bogenförmig um die Schleuderscheibe angeordnet sein und die Reinigungseinheit kann mit dem Schwenkarm oder dem Schlitten entlang der Schiene zu den Radarsensoren verfahrbar sein. Da die Radarsensoren bei einer derartigen Konfiguration feststehend gegenüber der Schleuderscheibe angeordnet sind, sind diese im Betrieb besonders gut vor einer mechanischen Beschädigung geschützt. Darüber hinaus können die Radarsensoren nach unten gerichtet sein, damit sich Verschmutzungen auf der Ein- und Austrittsfläche für die elektromagnetische Strahlung besonders schlecht anlagern können. Dadurch, dass die Reinigungseinheit an dem Schwenkarm angeordnet ist, ist diese besonders einfach aufgebaut. Bei einer Anordnung der Reinigungseinheit an einem Schlitten, der an der Schiene verfahrbar ist, ist die Reinigungseinheit besonders gut vor mechanischer Beschädigung geschützt.

Mehrere der Radarsensoren können an einem Träger bogenförmig um die Schleuderscheibe angeordnet sein und jedem der Radarsensoren kann eine Reinigungseinheit zugeordnet sein. Dadurch ist kein Verfahrmechanismus notwendig, um die Reinigungseinheit sequenziell nacheinander zu jedem Radarsensor zu verfahren.

Die Reinigungseinheiten können gegenüber den Radarsensoren einzeln oder gemeinsam über den Verfahrmechanismus verfahrbar sein. Beispielsweise kann an jedem Radarsensor eine Reinigungseinheit angeordnet sein, die mittels eines Antriebs gegenüber dem Radarsensor verfahren wird.

Darüber hinaus stellt die Erfindung mit dem Anspruch 12 ein Verfahren für einen Schleuderdüngerstreuer zur Ausbringung von Dünger auf einem Feld bereit, wobei der Dünger aus einem Vorratsbehälter auf eine Schleuderscheibe dosiert und von der Schleuderscheibe in einem Streufächer auf dem Feld verteilt wird, wobei eine Streucharakteristik des Streufächers mit wenigstens einem Radarsensor erfasst wird, dadurch gekennzeichnet, dass der Radarsensor mit einer Reinigungseinheit gereinigt wird.

Dadurch, dass der Radarsensor mit der Reinigungseinheit gereinigt wird, können Ablagerungen oder Verschmutzungen von der Ein- und Austrittsfläche des Radarsensors für die elektromagnetischen Wellen entfernt werden. Folglich wird die elektromagnetische Strahlung nicht mehr durch die Verschmutzungen verfälscht und es ist eine genaue Erfassung des Streufächers auf einfache Art und Weise gewährleistet.

Der Radarsensor kann in regelmäßigen Zeitabständen mit der Reinigungseinheit gereinigt werden. Dadurch ist auf einfache Art und Weise gewährleistet, dass die Verschmutzungen regelmäßig entfernt werden.

Der Radarsensor kann auf Basis eines Reinigungsbedarfs mit der Reinigungseinheit gereinigt werden. Beispielsweise kann durch eine Plausibilitätsprüfung der vom Radarsensor erfassten Daten ein Reinigungsbedarf festgestellt werden. Ebenso ist denkbar, dass mit dem Radarsensor ein Referenzpunkt und/oder eine Referenzfläche vermessen wird und auf Basis eines Vergleichs mit Soll-Daten ein Reinigungsbedarf festgestellt wird.

Der Radarsensor kann in einer Parkposition gereinigt werden. Dadurch wird der laufende Betrieb bei der Erfassung des Streufächers so wenig wie möglich gestört. Es versteht sich, dass das Verfahren auch die in Bezug auf die Ansprüche 1 - 11 beschriebenen Merkmale einzeln oder in beliebigen Kombinationen umfassen kann.

Weitere Merkmale und Vorteile der Erfindung werden nachfolgend anhand der in den Figuren dargestellten Ausführungsbeispiele beschrieben. Dabei zeigt:
- Fig. 1: ein Ausführungsbeispiel eines Schleuderdüngerstreuers mit einem Radarsensor an einem Schwenkarm in einer perspektivischen Ansicht;
- Fig. 2: den Schleuderdüngerstreuer aus der Fig. 1 in einer seitlichen, rückwärtigen Ansicht;
- Fig. 3: ein weiteres Ausführungsbeispiel eines Schleuderdüngerstreuers mit mehreren Radarsensoren an einem Träger und einer Reinigungseinheit in einer perspektivischen Ansicht;
- Fig. 4: ein Detail des Schleuderdüngerstreuer aus der Fig. 3 mit der Schleuderscheibe, den Radarsensoren und der Reinigungseinheit in einer Draufsicht; und
- Fig. 5: ein Detail einer alternative Ausführungsform der Reinigungseinheit des Schleuderdüngerstreuer aus der Fig. 3 in einer Draufsicht.

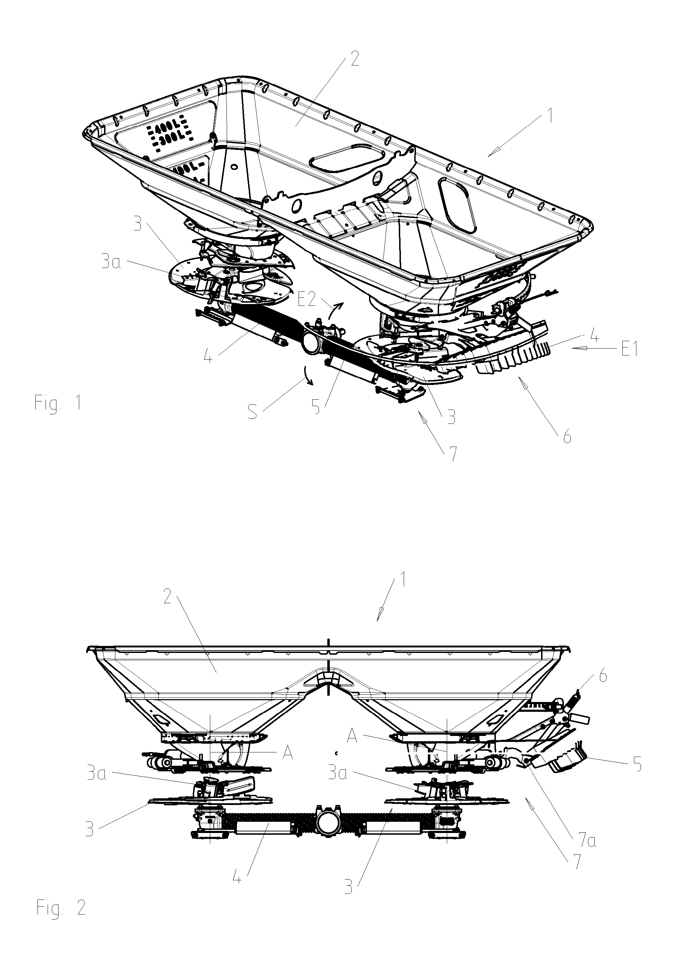

In der Fig. 1 ist ein erstes Ausführungsbeispiel eines Schleuderdüngerstreuers 1 mit Radarsensoren 5 und einer Reinigungseinheit 6 in einer perspektivischen Ansicht dargestellt. Zu sehen ist, dass der Schleuderdüngerstreuer 1 einen Vorratsbehälter 2 und zwei Schleuderscheiben mit Wurfarmen 3a aufweist. Der Dünger aus dem Vorratsbehälter 2 wird über die hier nicht dargestellte Dosieröffnungen auf die Schleuderscheiben 3 dosiert und es ergibt sich durch beide Schleuderscheiben 3 ein Streufächer mit einer nierenförmigen Streucharakteristik. Die Schleuderscheiben 3 sind an der Unterseite auf dem Untergestell 4 drehbar gelagert und werden über Antriebe angetrieben.

Darüber hinaus ist der Verfahrmechanismus 7 zu sehen, der hier als Schwenkarm 7a ausgebildet ist und der mit einem separaten Antrieb um die Drehachse A der Schleuderscheibe 3 zwischen den Endpositionen E₁ und E₂ schwenkbar ist.

Dadurch kann der Streufächer der vorderen Schleuderscheibe 3 mit den auf dem Schwenkarm 7a angeordneten Radarsensoren 5 abgetastet werden. Da der Schleuderdüngerstreuer 1 symmetrisch bezüglich der Schleuderscheiben 3 aufgebaut ist und sich beide in entgegengesetzter Richtung drehen, kann von der Erfassung des Streufächers einer Schleuderscheibe 3 auf eine Streucharakteristik beider Schleuderscheiben 3 geschlossen werden.

Des Weiteren ist zu sehen, dass sich an der einen Endposition E₁ die Reinigungseinheit 6 befindet, die hier als Bürste ausgeführt ist. Denkbar ist auch, dass sich an der Reinigungseinheit 6 eine Düse für ein Reinigungsmittel, wie beispielsweise Wasser und/oder Druckluft, befindet, um die Radarsensoren 5 abzublasen bzw. abzusprühen.

Es ist auch denkbar, dass an beiden Schleuderscheiben 3 jeweils ein derartiger Verfahrmechanismus 7 mit Radarsensoren 5 und eine Reinigungseinheit 6 angeordnet ist. Dadurch können die Streufächer beider Schleuderscheiben 3 unabhängig voneinander erfasst werden.

Die Reinigungseinheit wird wie folgt eingesetzt: Zwischen zwei Erfassungsvorgängen des Streufächers wird der Schwenkarm 7a mit den Radarsensoren 5 in die Endposition E₁ verfahren und die Ein- und Austrittsflächen für die elektromagnetische Strahlung der Radarsensoren 5 wird mit der Bürste abgebürstet. Dadurch werden Verschmutzungen besonders einfach entfernt und eine zuverlässige Funktion der Radarsensoren 5 ist gewährleistet. Denkbar ist hier, dass die Radarsensoren 5 in regelmäßigen Zeitabständen mit der Reinigungseinheit 6 gereinigt werden. Darüber hinaus wird bei einer NichtBenutzung der Radarsensoren 5, der Schwenkarm 7a in die Endposition E₁ als Parkposition gefahren. Dadurch fungiert die Bürste als Abdeckung und die Radarsensoren 5 sind in besonderer Weise gegen Verunreinigungen geschützt.

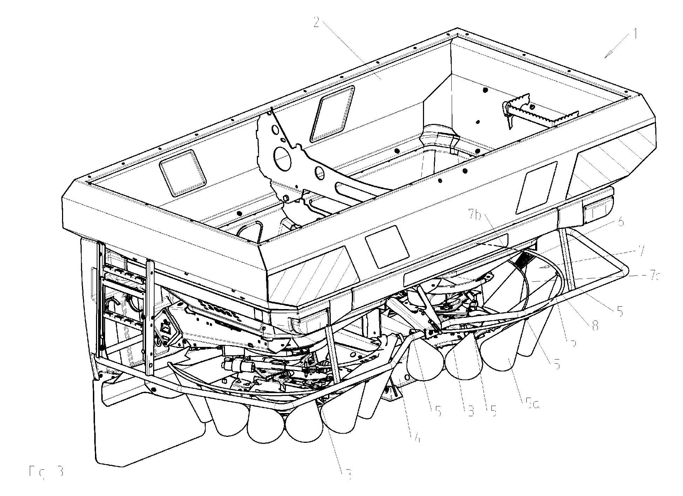

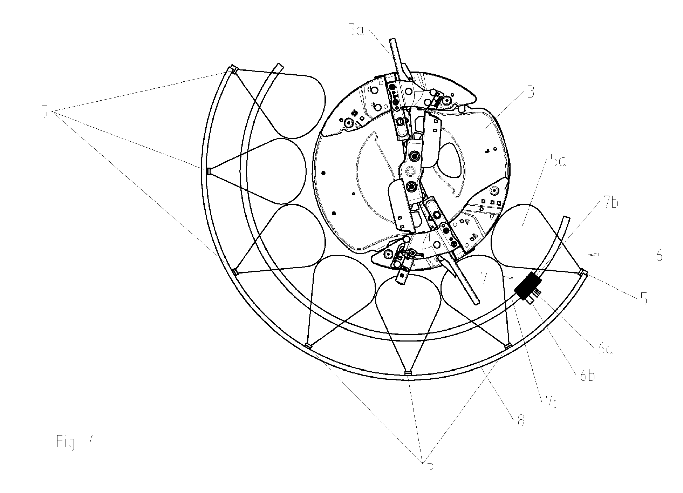

In der Fig. 3 ist eine weitere Ausführungsform eines Schleuderdüngerstreuers 1 mit mehreren Radarsensoren 5 an einem Träger 8 und einer Reinigungseinheit 6 an einer Schiene 7c in einer perspektivischen Ansicht dargestellt. Zudem ist in Fig. 4 eine Detailansicht der Schleuderscheibe 3, der Anordnung der Radarsensoren 5 und der Reinigungseinheit 6 mit dem Verfahrmechanismus 7 in einer Draufsicht dargestellt.

Zu sehen ist, dass der Schleuderdüngerstreuer 1 in dieser Ausführungsform einen Vorratsbehälter 2 aufweist, der über zwei Trichter den Dünger auf die beiden Schleuderscheiben 3 dosiert. Wie genauer in der Fig. 4 zu sehen ist, ist die Schleuderscheibe 3 mit Wurfarmen 3a ausgebildet, um den Dünger auf dem Feld durch eine Rotationsbewegung zu verteilen.

Im Bereich beider Schleuderscheiben 3 sind dabei an einem bogenförmigen Träger 8 die Radarsensoren 5 in regelmäßigen Abständen angeordnet. Diese weisen jeweils eine Erfassungskeule 5a auf, mit denen die Streufächer der Schleuderscheiben 3 erfasst werden.

Darüber hinaus ist zu sehen, dass die Erfassungskeulen 5a schräg von oben auf den Umgebungsbereich der Schleuderscheibe 3 gerichtet sind. Dadurch kann der gerade abgeworfene Dünger erfasst werden. Des Weiteren ist durch die schräg nach unten ausgerichtete Ein- und Austrittsfläche für die elektromagnetischen Wellen die Gefahr einer Anlagerung von Verschmutzungen geringer.

Darüber hinaus ist zu sehen, dass die Reinigungseinheit 6 über den Verfahrmechanismus 7 entlang der Radarsensoren 5 verfahrbar ist. Der Verfahrmechanismus besteht hier aus einer feststehenden bogenförmigen Schiene 7c, die mit konstantem Abstand entlang der Radarsensoren 5 angeordnet ist. Der darauf befindliche Schlitten 7b mit der Reinigungseinheit 6 kann über einen hier nicht dargestellten Antrieb zu den einzelnen Radarsensoren 5 verfahren werden und dabei mit der Bürste 6a und der Düse 6b den jeweiligen Sensor 5 reinigen.

Die Düse 6b ist hier als Luftdüse ausgebildet und wird über eine Leitung mit Druckluft versorgt. Dadurch werden trockene Verschmutzungen von den Radarsensoren 5 entfernt. Denkbar ist auch, dass die Düsen 6b für ein flüssiges Reinigungsmittel ausgebildet sind und/oder dass eine Absaugeinrichtung das abtropfende Reinigungsmittel absaugt.

Die Reinigungseinheit 6 wird hier ähnlich wie beim vorangegangenen Ausführungsbeispiel in regelmäßigen Zeitabständen zur Reinigung an den Radarsensoren 5 vorbei geführt. Dadurch ist eine zuverlässige Funktion der Radarsensoren 5 gewährleistet.

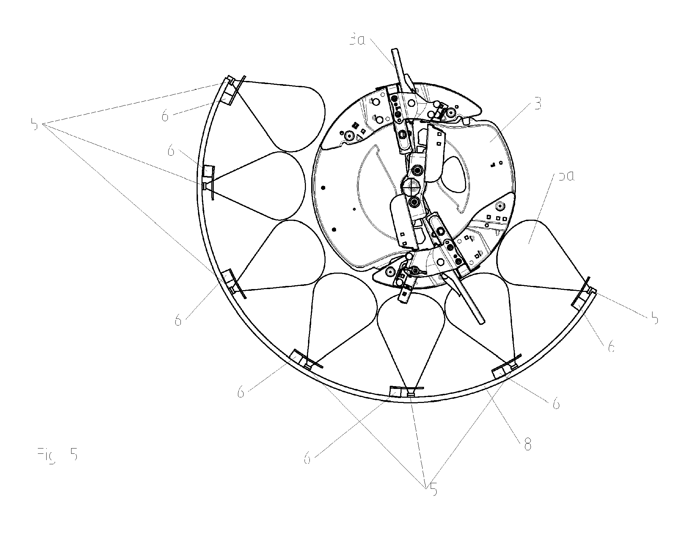

In der Fig. 5 ist als Detail ein alternatives Ausführungsbeispiel der Reinigungseinheit 6 für den Schleuderdüngerstreuer 1 aus der Fig. 3 in einer Draufsicht dargestellt. Das alternative Ausführungsbeispiel unterscheidet sich von der Fig. 4 dadurch, dass jedem Radarsensor 5 eine separate Reinigungseinheit 6 zugeordnet ist. Diese ist als kleine Bürste oder als Gummilippe ausgeführt, die mittels eines hier nicht dargestellten Verfahrmechanismusses über die Ein- und Austrittsfläche der Radarsensoren 5 bewegt wird. Dadurch können die Radarsensoren 5 individuell gereinigt werden und der Verfahrmechanismus kann besonders einfach aufgebaut werden.

Auch hier werden die Radarsensoren 5 von den Reinigungseinheiten 6 in regelmäßigen Zeitabständen gereinigt.

Darüber hinaus ist denkbar, dass mit einem Schmutzsensor oder über die Auswertung der erfassten Radardaten bei den in Bezug auf die Fig. 1 - 5 beschriebenen Ausführungsbeispielen ein Reinigungsbedarf ermittelt wird. Darauf basierend wird dann ein Reinigungsvorgang ausgelöst.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Schleuderdüngerstreuer (1) mit einem Vorratsbehälter (2) für Dünger, einer Schleuderscheibe (3) zur Verteilung des Düngers auf einem Feld in einem Streufächer und mit wenigstens einem Radarsensor (5) zur Erfassung einer Streucharakteristik des Streufächers, **dadurch gekennzeichnet, dass** dem Radarsensor (5) eine Reinigungseinheit (6) zugeordnet ist.

2. Schleuderdüngerstreuer (1) nach Anspruch 1, wobei die Reinigungseinheit (6) eine Bürste (6a) und/oder einen Gummiwischer mit regelmäßigen oder unregelmäßigen Erhebungen zur Reinigung des Radarsensors (5) umfasst.

3. Schleuderdüngerstreuer (1) nach Anspruch 1 oder 2, wobei die Reinigungseinheit (6) wenigstens eine Leitung und/oder eine Düse (6b) zur Abgabe eines Reinigungsmittels auf den Radarsensor umfasst.

4. Schleuderdüngerstreuer (1) nach Anspruch 3, wobei die Reinigungseinheit (6) eine Auffangeinrichtung für das Reinigungsmittel aufweist, die insbesondere als Absaugeinrichtung ausgebildet ist.

5. Schleuderdüngerstreuer (1) nach wenigstens einem der vorangegangenen Ansprüche, wobei die Reinigungseinheit (6) als Abdeckung für den Radarsensor (5) in einer Parkposition ausgebildet ist.

6. Schleuderdüngerstreuer (1) nach wenigstens einem der vorangegangenen Ansprüche, wobei der Radarsensor (5) mit der Reinigungseinheit (6) über einen Verfahrmechanismus (7) verbunden ist, der zum Verfahren des Radarsensors (5) oder der Reinigungseinheit (6) ausgebildet ist.

7. Schleuderdüngerstreuer (1) nach Anspruch 6, wobei der Verfahrmechanismus (7) einen Schwenkarm (7a) oder eine Schiene (7c) mit einem Schlitten (7b) zum Verfahren des Radarsensor (5) oder der Reinigungseinheit (6) umfasst.

8. Schleuderdüngerstreuer (1) nach Anspruch 7, wobei der Radarsensor (5) zur Abtastung des Streufächers an dem Schwenkarm (7a) angeordnet ist und der Radarsensor (5) zwischen zwei Endpositionen (E) mit dem Schwenkarm (7a) schwenkbar ist und wobei die Reinigungseinheit (6) an einer der beiden Endpositionen (E) angeordnet ist.

9. Schleuderdüngerstreuer (1) nach Anspruch 7, wobei mehrere der Radarsensoren (5) an einem Träger (8) bogenförmig um die Schleuderscheibe (3) angeordnet sind und die Reinigungseinheit (6) mit dem Schwenkarm (7a) oder dem Schlitten (7b) entlang der Schiene (7c) zu den Radarsensoren (5) verfahrbar ist.

10. Schleuderdüngerstreuer (1) nach wenigstens einem der vorangegangenen Ansprüche, wobei mehrere der Radarsensoren (5) an einem Träger (8) bogenförmig um die Schleuderscheibe (3) angeordnet sind und jedem Radarsensor (5) eine der Reinigungseinheiten (6) zugeordnet ist.

11. Schleuderdüngerstreuer (1) nach Anspruch 6 und 10, wobei die Reinigungseinheiten (6) gegenüber den Radarsensoren (5) einzeln oder gemeinsam über den Verfahrmechanismus (7) verfahrbar sind.

12. Verfahren für einen Schleuderdüngerstreuer (1) zur Ausbringung von Dünger auf einem Feld, wobei der Dünger aus einem Vorratsbehälter (2) auf eine Schleuderscheibe (3) dosiert und von der Schleuderscheibe (3) in einem Streufächer auf dem Feld verteilt wird, wobei eine Streucharakteristik des Streufächers mit wenigstens einem Radarsensor (5) erfasst wird, **dadurch gekennzeichnet, dass** der Radarsensor (5) mit einer Reinigungseinheit (6) gereinigt wird.

13. Verfahren nach Anspruch 12, wobei der Radarsensor (5) in regelmäßigen Zeitabständen mit der Reinigungseinheit (6) gereinigt wird.

14. Verfahren nach Anspruch 12 oder 13, wobei der Radarsensor (5) kann auf Basis eines Reinigungsbedarfs mit der Reinigungseinheit (6) gereinigt wird.

15. Verfahren nach Anspruch nach wenigstens einem der Ansprüche 12 - 14, wobei der Radarsensor (5) in einer Parkposition gereinigt wird.
